# EUROPÄISCHE PATENTSCHRIFT

(11) **EP 1 761 425 B1**
(45) Veröffentlichungstag und Bekanntmachung des Hinweises auf die Patenterteilung: **06.02.2008**
(21) Anmeldenummer: 05755973.4
(22) Anmeldetag: 28.06.2005
(51) Int. Cl.: B62D 5/09

(54) **HYDRAULISCHE LENKUNG MIT ABSICHERUNG GEGEN UNKONTROLLIERTE LENKBEWEGUNGEN**
HYDRAULIC STEERING SYSTEM PROTECTED AGAINST UNCONTROLLED STEERING MOVEMENTS
DIRECTION HYDRAULIQUE POURVUE D'UNE PROTECTION CONTRE LES MOUVEMENTS DE DIRECTION INCONTROLES

(30) Priorität: 30.06.2004 DE 102004031676; 23.12.2004 DE 102004062387
(43) Veröffentlichungstag der Anmeldung: 14.03.2007
(73) Patentinhaber: Brueninghaus Hydromatik GmbH, 89275 Elchingen (DE)
(72) Erfinder: RATHKE, Rolf-Joachim, D- 89073 ULM (DE); BERGMANN, Erhard, 19079 Mirow (DE)
(74) Vertreter: Körfer, Thomas
(86) Internationale Anmeldenummer: PCT/EP2005/006952
(87) Internationale Veröffentlichungsnummer: WO 2006/002872

(56) Entgegenhaltungen:
- DE-A1- 3 515 124
- DE-A1- 3 837 395
- DE-A1- 4 031 969

## Beschreibung

Die Erfindung betrifft eine hydraulische Lenkung mit einer hydraulischen Lenkeinheit und einer Hilfskraftvorrichtung. Die hydraulische Lenkung wird beispielsweise in mobilen Arbeitsmaschinen im bau- und landwirtschaftlichen Bereich verwendet, aber auch beispielsweise in Flurförderfahrzeugen.

Beispielsweise wird in der DE 38 37 395 A1 eine hydrostatische Hilfskraftlenkung für Fahrzeuge beschrieben, welche eine Hilfskraftvorrichtung aufweist. DE3837395 offenbart eine hydraulische Lenkung mit einer hydraulischen Lenkeinheit, die abhängig von der Bewegung eines Lenkers Hydraulikmedium zu einem Lenkzylinder speist und einer Hilfsvorrichtung mit einer Einheit, welche abhängig von der Bewegung des Lenkers zur Unterstützung der Lenkbewegung ebenfalls Hydraulikmedium zu dem Lenkzylinder speist, wobei das aus dem Lenkzylinder in Folge des zugespeisten Hydraulikmediums verdrängte bzw. abfließende Hydraulikmedium alleinig über die Lenkeinheit in einen Tank bzw. zu einer Pumpe zurückfließen kann. Die sehr indirekt und meist weitab des Lenkers angeordnete Hilfskraftvorrichtung unterliegt zahlreichen Fehlereinflüssen. Die auch als hydrostatische Hilfskraftlenkung bezeichnete hydraulische Lenkung mit Hilfskraftvorrichtung ist nicht gegen Fehlfunktionen der Hilfskraftvorrichtung geschützt.

Nachteilig bei der durch die DE 38 37 395 A1 beschriebenen hydraulischen Lenkung ist, daß es bei Fehlfunktion der Hilfskraftvorrichtung zu einem durch den Fahrer nicht beherrschbaren Lenkverhalten kommen kann.

Es ist deshalb die Aufgabe der Erfindung eine hydraulische Lenkung mit einer Hilfsvorrichtung zu schaffen, die es erlaubt auch bei Fehlfunktion der Hilfsvorrichtung das Fahrzeug kontrollierbar zu lenken.

Die Aufgabe wird erfindungsgemäß durch eine hydraulische Lenkung mit Hilfsvorrichtung mit den Merkmalen des Anspruchs 1 gelöst.

Die in den Unteransprüchen ausgeführten Maßnahmen betreffen vorteilhafte Weiterbildungen der erfindungsgemäßen hydraulischen Lenkung.

Insbesondere ist es vorteilhaft, wenn ein Zurückfließen des aus dem Lenkzylinder abströmenden Hydraulikmediums über die Hilfsvorrichtung bzw. die Ventileinheit durch zumindest eine Blockiervorrichtung, beispielsweise in Form von Rückschlagventilen, verhindert wird, welche den Fluß von Hydraulikmedium nur in einer Richtung zuläßt.

Vorteilhaft ist es zudem, die Ventileinheit der Hilfsvorrichtung als Proportionalventil auszubilden. Die Hilfsregelung kann dadurch noch genauer erfolgen.

Weiterhin ist es vorteilhaft die Hilfsregelung durch ein elektronisches Steuergerät in Abhängigkeit von zumindest der Lenkbewegung zu regeln oder zu steuern. Insbesondere kann die Hilfsregelung dadurch leicht von weiteren Führungsgrößen beeinflußbar gemacht werden, beispielsweise der Fahrzeuggeschwindigkeit.

Die Erfindung wird nachstehend anhand einer schematischen Darstellung an einem Ausführungsbeispiel beispielhaft näher erläutert. Übereinstimmende Bauteile sind dabei mit übereinstimmenden Bezugszeichen versehen. Es zeigt:
- Fig. 1: eine schematische Darstellung einer erfindungsgemäßen hydraulischen Lenkung;
- Fig. 2: eine detailliertere schematische Darstellung eines ersten Ausführungsbeispiels der erfindungsgemäßen hydraulischen Lenkung;
- Fig. 3: eine detailliertere schematische Darstellung eines zweiten Ausführungsbeispiels der erfindungsgemäßen hydraulischen Lenkung;
- Fig. 4: eine schematische Darstellung einer zweiten entsperrbaren Hilfsvorrichtung und
- Fig. 5: eine schematische Darstellung eines zweiten Ausführungsbeispiels einer entsperrbaren Hilfsvorrichtung.

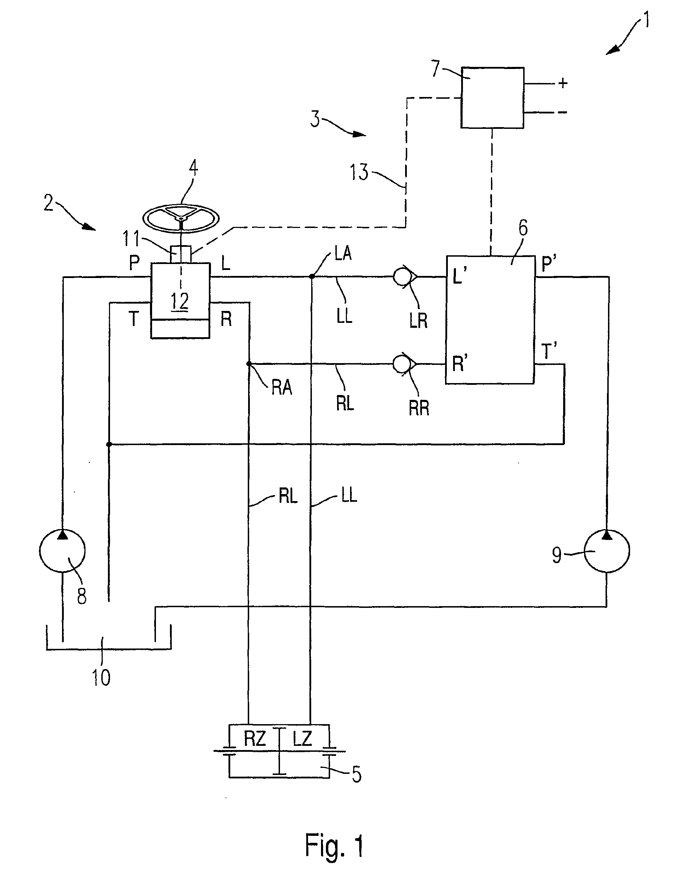

Die in Fig. 1 mit dem Bezugszeichen 1 bezeichnete dargestellte hydraulische Lenkung besteht im wesentlichen aus einer Lenkeinheit 2, einer Hilfsvorrichtung 3, einem Lenkzylinder 5 und aus einer Rechtsleitung RL und einer Linksleitung LL, welche die Lenkeinheit 2, die Hilfsvorrichtung 3 und den Lenkzylinder 5 hydraulisch verbinden.

Im dargestellten Ausführungsbeispiel besteht die Lenkeinheit 2 aus einem als Lenkrad ausgeführten Lenker 4 und einem Ventilblock 12. Am Lenker 4 ist ein Sensor 11 angeordnet, welcher Daten über beispielsweise die Position des Lenkers 4 über eine elektrische Leitung 13 an ein Steuergerät 7 der Hilfsvorrichtung 3 übermittelt. Im Ausführungsbeispiel wird der Lenkeinheit 2 bzw. dem Ventilblock 12 aus einem Tank 10 und einer ersten Pumpe 8, welche beispielsweise als Zahnradpumpe ausgeführt ist, über einen Zulaufanschluss P des Ventilblocks 12 Hydraulikmedium druckbehaftet zugeführt. Der Ventilblock 12 weist außerdem noch einen Linksanschluß L und einen Rechtsanschluß R auf. Der am Zulaufanschluß P herrschende Druck wird je nach Bewegung des Lenkers 4 über nicht dargestellte Ventile im Ventilblock 12 entweder an den Linksanschluß L oder den Rechtsanschluß R durchgeleitet, wobei aus dem Linksanschluß L oder dem Rechtsanschluß R eine Menge an Hydraulikmedium austritt, welche typischerweise in proportionalem Zusammenhang mit der Stärke des Lenkereinschlags steht.

Das Steuergerät 7 steuert bzw. regelt in Abhängigkeit zumindest der Bewegung des Lenkers 4 eine Ventileinheit 6 der Hilfsvorrichtung 3. Der Ventileinheit 6 wird aus dem Tank 10 über eine zweite Pumpe 9 ebenfalls Hydraulikmedium druckbehaftet über einen Zulaufanschluß P' zugeführt. Die als Proportionalventil ausgebildete Ventileinheit 6 leitet eine den Steuerbefehlen des Steuergeräts 7 entsprechende Menge an Hydraulikmedium über einen Linksanschluß L' in die Linksleitung LL und über einen Rechtsanschluß R' in die Rechtsleitung RL ein und/oder baut einen entsprechenden Druck auf. Die Linksleitung LL führt vom Linksanschluß L' der Ventileinheit 6 an den Linksanschluß L der Lenkeinheit 2. Die Rechtsleitung RL führt vom Rechtsanschluß R' der Ventileinheit 6 an den Rechtsanschluß R der Lenkeinheit 2.

Die Rechtsleitung RL weist eine rechte Abzweigung RA auf, die mit einem rechten Lenkzylinderraum RZ des Lenkzylinders 5 verbunden ist. Die Linksleitung LL weist eine linke Abzweigung LA auf, die mit einem linken Lenkzylinderraum LZ des Lenkzylinders 5 verbunden ist. Hydraulisch sind demnach die Rechtsanschlüsse R' und R parallel und die Linksanschlüsse L und L' parallel geschaltet, wobei beispielsweise die Linksanschlüsse L und L' in anderen nicht dargestellten Ausführungsbeispielen jeweils über getrennte Hydraulikleitungen mit dem linken Lenkzylinderraum LZ verbunden sein können und dabei über diesen in ständiger Verbindung stehen. Über einen Ablaufanschluß T' der Ventileinheit 6 steht die Ventileinheit 6 mit dem Tank 10 in Verbindung. Über einen Ablaufanschluß T der Lenkeinheit 2 steht die Lenkeinheit 2 mit dem Tank 10 in Verbindung.

Beispielsweise wird bei einer Rechtsdrehung des Lenkers 4 der Rechtsleitung RL aus dem Rechtsanschluß R der Lenkeinheit 2 eine von dem Ausmaß der Drehbewegung des Lenkers 4 abhängige Hydraulikmediummenge eingespeist. Beispielsweise um die Lenkwirkung zu unterstützten oder eine Lenkwirkung auch bei einem Ausfall der Funktion des Ventilblocks 12 sicherzustellen, veranlaßt das Steuergerät 7 aufgrund der vom Sensor 11 übermittelten Bewegung des Lenkers 4 die Ventileinheit 6 Hydraulikmedium aus dem Rechtsanschluß R' der Ventileinheit 6 in die Rechtsleitung RL zu speisen.

Aufgrund der vom Ventilblock 12 und der Hilfsvorrichtung 3 in die Rechtsleitung RL eingespeisten Hydraulikmediumsmenge vergrößert sich der im Lenkzylinder 5 liegende rechte Lenkzylinderraum RZ, wobei sich der dem rechten Lenkzylinderraum RZ gegenüberliegende linke Lenkzylinderraum LZ durch die Vergrößerung des rechten Lenkzylinderraums RZ verkleinert. Durch die Verkleinerung des linken Lenkzylinderraums LZ wird ein entsprechender Teil der darin befindlichen Menge an Hydraulikmedium in die Linksleitung LL verdrängt. Entsprechend den oben gemachten Ausführungen strömt bei einer Linksdrehung des Lenkers 4 Hydraulikmedium aus dem rechten Lenkzylinderraum RZ in die Rechtsleitung RL.

Zwischen der linken Abzweigung LA und dem Linksanschluß L' der Ventileinheit 6 ist eine in diesem Ausführungsbeispiel als linkes Rückschlagventil LR ausgebildete erste Blockiervorrichtung angeordnet, welche verhindert, daß Hydraulikmedium über die Ventileinheit 6 aus dem Lenkzylinder 5 bzw. dem linken Lenkzylinderraum LZ und der Linksleitung LL bzw. dem System aus Lenkzylinder 5 und Linksleitung LL abströmen kann.

Zwischen der rechten Abzweigung RA und dem Rechtsanschluß R' der Ventileinheit 6 ist eine als rechtes Rückschlagventil RR ausgebildete zweite Blockiervorrichtung angeordnet, welche verhindert, daß Hydraulikmedium über die Ventileinheit 6 aus dem Lenkzylinder 5 bzw. dem rechten Lenkzylinderraum RZ und der Rechtsleitung RL bzw. dem System aus Lenkzylinder 5 und Rechtsleitung RL abströmen kann.

Im gezeigten Ausführungsbeispiel wird also immer die gesamte aus dem Lenkzylinder 5 zurückgeführte Menge an Hydraulikmedium über die Lenkeinheit 2 zurückgeführt und nicht über die Hilfskraftvorrichtung 3 bzw. die Ventileinheit 6. Die Vorrichtung, welche ein Zurückfließen des Hydraulikmediums verhindert bzw. nur in eine Strömungsrichtung zuläßt, nämlich aus dem System von Lenkzylinder 5 und Leitungen RL und LL heraus, kann in anderen Ausführungsbeispielen auch beispielsweise in der Ventileinheit 6 angeordnet oder über entsprechend modifizierte Steuerkolben der Ventileinheit 6 ausgebildet sein.

Bei einer Fehlfunktion der Hilfsvorrichtung 3 bzw. der Ventileinheit 6 kann die Ventileinheit 6 plötzlich versuchen, Hydraulikmedium durch den Linksanschluß L' in die Linksleitung LL oder durch den Rechtsanschluß R' in die Rechtsleitung RL zu leiten. Ohne die erfindungsgemäßen Merkmale der hydraulischen Lenkung 1 könnte im Ausführungsbeispiel das aus dem Lenkzylinder 5 verdrängte Hydraulikmedium über den jeweils anderen Anschluß L' oder R' der Ventileinheit 6 abfließen, so daß es zu unbeabsichtigten oder überraschend starken und plötzlichen Lenkbewegungen des Fahrzeugs kommt, da ein Gegenlenken des Fahrers dann nur verspätet erfolgen kann.

Ist der Lenker 4 beispielsweise in Neutralstellung, kommt es bei einem fehlerhaften Versuch der Hilfsvorrichtung 3, Hydraulikmedium durch den Linksanschluß L' der Ventileinheit 6 in die Linksleitung LL zuzumessen nicht zu einem Abfluß von Hydraulikmedium aus dem rechten Lenkzylinderraum RZ, da ein Abströmen der Hydraulikflüssigkeit aus dem rechten Lenkzylinderraum RZ zum einen nicht über den Rechtsanschluß R der Lenkeinheit 5 erfolgen kann, da dieser durch die Neutralstellung des Lenkers 4 geschlossen ist, und zum anderen deshalb nicht, weil der Abfluß von Hydraulikmedium über den Rechtsanschluß R' der Ventileinheit 6 durch das rechte Rückschlagventil RR unterbunden wird. So kommt es zu keiner Lenkbewegung des Fahrzeugs. Entsprechendes gilt bei einer Neutralstellung des Lenkers 4 und einem fehlerhaften Versuch der Hilfskraftvorrichtung, 3 Hydraulikmedium durch den Rechtsanschluß R' der Ventileinheit 6 in die Rechtsleitung RL zuzumessen. Eine Neutralstellung in diesem Sinne ist auch außerhalb der Mittelstellung des Lenkers zu sehen, sofern der Lenker in dieser Position verharrt, also keine Drehbewegung ausführt.

Bei einer hydraulischen Lenkung 1 ohne die erfindungsgemäßen Merkmale, würde das aus dem rechten Lenkzylinderraum RZ abfließende Hydraulikmedium über den Rechtsanschluß R' der fehlerhaft funktionierenden oder fehlerhaft gesteuerten Ventileinheit 6 abfließen und es käme zu einer unbeabsichtigten Lenkbewegung.

Ist der Lenker 4 im gezeigten Ausführungsbeispiel beispielsweise in Rechtsdrehung, kommt es bei einem fehlerhaften Versuch der Hilfskraftvorrichtung 3 Hydraulikmedium durch den Linksanschluß L' der Ventileinheit 6 in die Linksleitung LL zuzumessen zu einem Abfluß der aus der Ventileinheit 6 gespeisten Menge an Hydraulikmedium durch den gleichzeitig durch die Rechtsstellung geöffneten Linksanschluß L der Lenkeinheit 2. Der Linksanschluß L' wird quasi über die Lenkeinheit 2 drucklos auf den Tank 10 geschaltet. Dies bewirkt eine nur sehr geringfügige Druckwirkung des durch den Linksanschluß L' gespeisten Hydraulikmediums auf den Lenkzylinder 5. Die Lenkwirkung der Lenkung 1 in die rechte Richtung durch die Rechtsstellung des Lenkers 4 bleibt abgeschwächt erhalten, da das aus dem Rechtsanschluß R der Lenkeinheit 2 zugemessene Hydraulikmedium nicht über den durch das rechte Rückschlagventil RR blockierten Rechtsanschluß R' der Ventileinheit 6 abfließen kann und so ein Abfließen von Hydraulikmedium aus dem linken Lenkzylinderraum LZ über den geöffneten Linksanschluß L der Lenkeinheit 2 bewirkt wird. Entsprechendes gilt bei einer Linksdrehung des Lenkers 4 und einem fehlerhaften Versuch der Hilfsvorrichtung 3, Hydraulikmedium durch den Rechtsanschluß R' der Ventileinheit 6 in die Rechtsleitung RL zuzumessen.

Bei einer hydraulischen Lenkung 1 ohne die erfindungsgemäßen Merkmale, würde es bei Rechtsdrehung des Lenkers 4 bei einem fehlerhaften Versuch der Hilfsvorrichtung 3, Hydraulikmedium durch den Linksanschluß L' der Ventileinheit 6 in die Linksleitung LL zuzumessen, zu einem Abfluß der von dem Rechtsanschluß R der Lenkeinheit 2 eingespeisten Menge an Hydraulikmedium über den parallel geschalteten Rechtsanschluß R' der Ventileinheit 6 kommen, ohne daß auf den rechten Lenkzylinderraum RZ ein nennenswerter Druck ausgeübt würde. Beide Hydraulikströme würden somit keinen Druck ausüben und es käme zu keiner Lenkwirkung der Lenkung 1. Da der Hilfskraftvorrichtung 3 aber oft der größere Ölstrom zur Verfügung steht, kann es auch zu einer der Lenkbewegung des Lenkers 4 entgegen gerichteten Lenkwirkung kommen.

Führt der Lenker 4 im gezeigten Ausführungsbeispiel beispielsweise nur in leichter Rechtsdrehung aus, kommt es bei einem fehlerhaften Versuch der Hilfsvorrichtung 3 Hydraulikmedium mit größtem Druck bzw. in maximaler Menge durch den Rechtsanschluß R' der Ventileinheit 6 in die Rechtsleitung RL zuzumessen zu einem erhöhtem Gegendruck im linken Lenkzylinderraum LZ, da durch das abflußversperrende linke Rückschlagventil LR das Hydraulikmedium nur über den Linksanschluß L der Lenkeinheit 2 abfließen kann. Die Bewegungen des Lenkzylinders 5 sind dadurch weniger unerwartet schnell und bleiben beherrschbar.

Entsprechendes gilt bei einer leichten Linksdrehung des Lenkers 4 und einem fehlerhaften Versuch der Hilfskraftvorrichtung 3, Hydraulikmedium mit größtem Druck bzw. in maximaler Menge durch den Linksanschluß L' der Ventileinheit 6 in die Linksleitung LL zuzumessen.

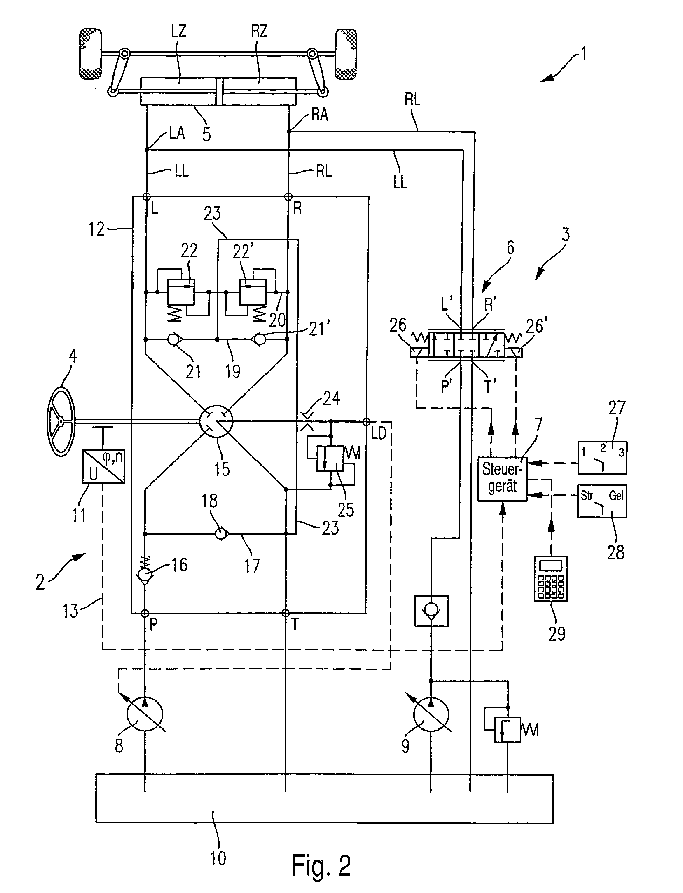

Die Fig. 2 zeigt ein Ausführungsbeispiel der erfindungsgemäßen hydraulischen Lenkung, bei dem der Ventilblock 12 sowie die Ventileinheit 6 in einer detaillierten hydraulischen Beschaltung dargestellt sind. Um unnötige Wiederholungen zu vermeiden, sind mit der Fig. 1 übereinstimmende Bezugszeichen auch in der Fig. 2 verwendet, wobei auf eine erneute Beschreibung verzichtet wird.

In dem Ventilblock 12 ist ein Lenkventil 15 vorgesehen, das mit dem Lenker 4 zusammenwirkt. In Abhängigkeit von einer Drehbewegung des Lenkers 4 wird durch Lenkventil 15 ein Zulaufanschluss P während einer Drehwebung nach links mit dem Linksanschluss L und während einer Drehbewegung nach rechts mit dem Rechtsanschluss R verbunden. Gleichzeitig wird der jeweils andere Anschluss über das Lenkventil 15 mit dem Tankanschluss T verbunden. Zwischen dem Zulaufanschluss P und dem Lenkventil 15 ist ein in Richtung des Lenkventils 15 angeordnetes, federbelastetes Rückschlagventil 16 angeordnet. Im weiteren Verlauf der Verbindung zwischen dem Zulaufanschluss P und dem Lenkventil 15 ist ein erster Verbindungskanal 17 ausgebildet, der den Zulaufanschluss P mit dem Tankanschluss T verbinden. In diesem ersten Verbindungskanal 17 ist ein in Richtung des Zulaufanschlusses P öffnendes zweites Rückschlagventil 18 angeordnet.

Innerhalb des Ventilblocks 12 sind zudem der Linksanschluss L und der Rechtsanschluss R über einen zweiten Verbindungskanal 19 sowie einen dritten Verbindungskanal 20 miteinander verbunden. In dem zweiten Verbindungskanal 19 sind ein drittes Rückschlagventil 21 und ein viertes Rückschlagventil 21' angeordnet, wobei das dritte Rückschlagventil 21 in Richtung des Linksanschlusses L und das vierte Rückschlagventil 21' in Richtung des Rechtsanschlusses R öffnet.

In dem dritten Verbindungskanal 20 sind ein erstes Differenzdruckbegrenzungsventil 22 und ein zweites Differenzdruckbegrenzungsventil 22' angeordnet. Die beiden Differenzdruckbegrenzungsventile 22 und 22' sind jeweils federbelastet. Unter Umgehung des Lenkventils 15 ist der Tankanschluss weiterhin über eine Umgehungsleitung 23 mit dem dritten Verbindungskanal 20 verbunden, wobei der Umgehungskanal 23 an einem Punkt des dritten Verbindungskanals 20 ausmündet, der zwischen dem ersten und dem zweiten Differenzdruckbegrenzungsventil 22 bzw. 22' ausmündet. Im weiteren Verlauf verbindet der Umgehungskanal 23 den dritten Verbindungskanal 20 mit dem zweiten Verbindungskanal 19, wobei die Verbindungsstelle zwischen dem Umgehungskanal 23 und dem zweiten Verbindungskanal 19 wiederum zwischen dem dritten und vierten Rückschlagventil 21, 21' ausmündet.

Steigt beispielsweise der Druck in der Linksleitung LL an, so öffnet ab einem bestimmten, durch die Feder des ersten Differenzdruckbegrenzungsventils 22 festgelegten Differenzdruck das erste Differenzdruckbegrenzungsventil 22. Das Differenzdruckbegrenzungsventil 22 ist hierzu einerseits entgegen der Kraft der Feder mit dem in der Linksleitung LL herrschenden Druck beaufschlagt. In entgegengesetzter Richtung und gleichwirkend mit der Feder ist das erste Differenzdruckbegrenzungsventil 22 mit dem in dem dritten Verbindungskanal 20 herrschenden Druck beaufschlagt. Sobald das erste Differenzdruckbegrenzungsventil 22 öffnet wird Druckmittel aus der Linksleitung LL über das erste Differenzdruckbegrenzungsventil 22 in Richtung der Umgehungsleitung 23 abgeführt. Das abgeführte Druckmittel strömt weiter über die Umgehungsleitung 23 einerseits über den zweiten Verbindungskanal 19 und das daraufhin öffnende vierte Rückschlagventil 21' in Richtung des Rechtsanschlusses. Zudem wird das aus der Linksleitung LL abgeführte Druckmittel über die Umgehungsleitung 23 dem Tankanschluss T zugeführt und in den Tank 10 abgeleitet. Über das erste Differenzdruckbegrenzungsventil 22 und das vierte Rückschlagventil 21' erfolgt daher eine Angleichung des in der Linksleitung LL und der Rechtsleitung RL herrschenden Drucks, sofern bei der beschriebenen Druckerhöhung in der Linksleitung LL eine Drehung des Lenkers 4 nicht erfolgt und damit das Lenkventil 15 in einer Position befindet, in der Anschlüsse voneinander getrennt sind.

Durch die Druckangleichung in der Linksleitung LL und der Rechtsleitung RL wird auch in dem linken Zylinderraum LZ und dem rechten Zylinderraum RZ eine Angleichung des Drucks erreicht. Durch die Angleichung dieses Drucks heben sich die auf die Lenkung auswirkenden Kräfte gegeneinander auf, so dass es zu keiner unbeabsichtigten Lenkbewegung kommt. Wird auf Grund einer Drehbewegung des Lenkers 4 entweder der Linksanschluss L oder der Rechtsanschluss R mit dem Tankanschluss T über das Lenkventil 15 verbunden, so wird im darüber abgeführten Volumenstrom ein Teil entnommen und über eine Drossel 24 abgeführt. Stromabwärts der Drossel 24 ist an dem Ventilblock 12 ein Steuerdruckanschluss LD ausgebildet. Über den an dem Steuerdruckanschluss LD anstehenden Steuerdruck wird die Fördermenge der in der Fig. 2 einstellbar ausgeführten ersten Pumpe 8 eingestellt. Zwischen der Drossel 24 und dem Steuerdruckanschluss LD ist zum Vermeiden von zu großen auftretenden Steuerdrücken ein Leitungszweig vorgesehen, in dem ein drittes Differenzdruckbegrenzungsventil 25 angeordnet ist. Mittels des dritten Druckbegrenzungsventils 25 wird der Steuerdruckanschluss LD bei Auftreten einer einem bestimmten, einstellbaren Wert überschreitenden Druckdifferenz in Richtung des Tankanschlusses T entspannt.

Die Ventileinheit 6 ist in der Figur als 4/3-Wegeventil ausgeführt. In der in der Fig. 2 dargestellten Ruheposition der Ventileinheit 6 sind der Zulauf-, Tank-, Links- und Rechtsanschluss P', T', L' und R' voneinander getrennt. Ohne eine Ansteuerung durch das Steuergerät 7 wird die Ventileinheit 6 in dieser Ruheposition durch zwei in entgegengesetzte Richtung auf die Ventileinheit 6 einwirkende Federn gehalten. Über das Steuergerät 7 sind ein erster Elektromagnet 26 oder ein zweiter Elektromagnet 26' mit einem Signal beaufschlagbar. Der erste Elektromagnet 26 beaufschlagt die Ventileinheit 6 in einer Kraft in Richtung einer ersten Endposition der Ventileinheit 6. In dieser ersten Endposition der Ventileinheit 6 sind der Zulaufanschluss P' mit dem Linksanschluss L' der Ventileinheit 6 verbunden, so dass über die zweite Pumpe 9 Druckmittel in die Linksleitung LL eingespeist wird.

Wird dagegen der zweite Elektromagnet 26' mit einem Steuersignal von dem Steuergerät 7 beaufschlagt, so verstellt der Elektromagnet 26' die Ventileinheit 6 in Richtung seiner zweiten Endposition, in der der Zulaufanschluss P' mit dem Rechtsanschluss R' verbunden ist. In der zweiten Endposition der Ventileinheit 6 wird damit durch die zweite Pumpe 9 Druckmittel aus dem Tank 10 angesaugt und in die Rechtsleitung RL gefördert. Die jeweils nicht mit dem Zulaufanschluss P' verbundene Rechtsleitung R' bzw. Linksleitung LL bleibt geschlossen, so dass ein Ableiten von Druckmittel über die Ventileinheit 6 nicht erfolgen kann. Die Blockiervorrichtung, die das Zurückfließen des Hydraulikmediums verhindert, ist somit in die Ventileinheit 6 unmittelbar integriert. Zur Absicherung des hydraulischen Systems ist in der Verbindung zwischen den zweiten Pumpe 9 und dem Zulaufanschluss P' der Ventileinheit 6 ein weiteres Rückschlagventil ausgebildet.

Wie es bereits zur Fig. 1 ausgeführt wurde, werden die Steuersignale, die an den ersten Elektromagneten 26 bzw. den zweiten Elektromagneten 26' geschickt werden von dem Steuergerät 7 in Abhängigkeit von mehreren Parametern ermittelt. Über die elektrische Leitung 13 dem Steuergerät hierzu z.B. eine Spannung von dem Sensor 11 zugeführt. Die Ausgangsspannung des Sensors 11 hängt dabei z.B. der Drehwinkel und einer Drehzahl ab, die der Drehbewegung des Lenkers 4 entsprechen. Die von dem Steuergerät 7 ausgegebenen Steuersignale können weiterhin von einem ersten Wahlschalter 27 und einem zweiten Wahlschalter 28 beeinflusst werden. Die Änderung der hydraulischen Übersetzung, die durch die Hilfsvorrichtung 3 erreicht wird, kann somit unter Berücksichtigung bestimmter Betriebssituationen variiert werden. Zum Beispiel kann über den ersten oder den zweiten Wahlschalter 27, 28 ein geändertes Steuerverhalten auf Grund der Bewegung einer Arbeitsmaschine auf der Straße oder im Gelände erfolgen. Der aus einer bestimmten Drehbewegung des Lenkers 4 resultierende Lenkeinschlag kann damit z.B. an unterschiedliche Fahrgeschwindigkeiten im Gelände bzw. auf der Straße angepasst werden.

Weiterhin kann über eine Serviceeinrichtung 29 eine Anpassung der Parametersätze des Steuergeräts 7 erfolgen.

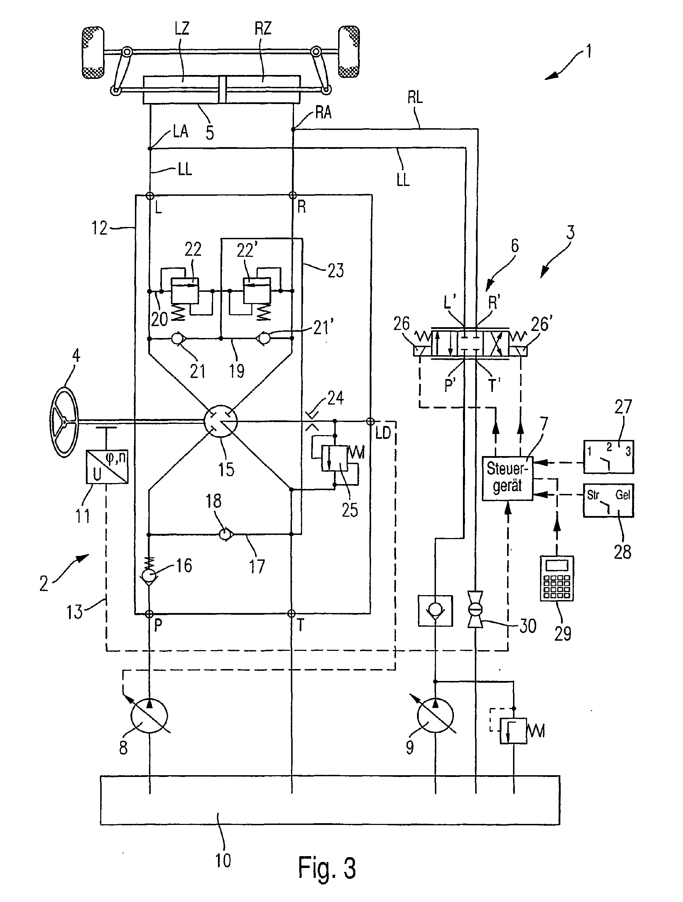

Das zweite, in der Fig. 3 dargestellte Ausführungsbeispiel der erfindungsgemäßen hydraulischen Lenkung unterscheidet sich von dem Ausführungsbeispiel der Fig. 2 dadurch, dass eine geänderte Ventileinheit 6' in der Hilfsvorrichtung 3 verwendet wird. Im Gegensatz zu der Ventileinheit 6 ist bei der geänderten Ventileinheit 6' in der ersten Endposition nicht nur der Zulaufanschluss P' mit der Linksleitung LL verbunden, sondern zusätzlich die Rechtsleitung RL mit dem Tankanschluss T' verbunden. Erfolgt dagegen die Auslenkung der geänderten Ventileinheit 6' aus seiner in der Fig. 3 dargestellten Ruheposition in Richtung der zweiten Endposition, so wird einerseits der Zulaufanschluss P' mit der Rechtsleitung RL zunehmend verbunden und andererseits die Linksleitung LL zunehmend mit dem Tankanschluss T' verbunden. Dadurch wird außerhalb der Ruheposition der geänderten Ventileinheit 6' ein Zurückfließen von Hydraulikmedium über die geänderte Ventileinheit 6' ermöglicht. Stromabwärts der geänderten Ventileinheit 6' ist zum Verhindern des Rückfließen des Hydraulikmediums eine separate Blockiervorrichtung 30 in der zu dem Tank 10 führenden Leitung vorgesehen.

Um eine noch bessere Berücksichtigung der jeweiligen Betriebssituation zu ermöglichen, kann die separate Blockiervorrichtung 30 auch entsperrbar ausgeführt sein. In Abhängigkeit von der jeweiligen Fahrsituation kann danach sowohl über das Lenkventil 15 des Ventilblocks 12 als auch über die Ventileinheit 6' der Hilfsvorrichtung 3 Hydraulikmedium in den Tank 10 zurückgeführt werden.

Entsperrbare Blockiervorrichtungen sind jedoch nicht nur bei der separaten Blockiervorrichtung 30, wie sie in Fig. 3 dargestellt ist, möglich.

Ausgehend von beispielsweise der Anordnung des linken Rückschlagventils LR und des rechten Rückschlagventils RR, wie er in dem ersten Ausführungsbeispiel der Fig. 1 gezeigt ist, kann der Rückfluss über die Ventileinheit 6 durch Entsperren der beiden Rückschlagventile LR und RR erfolgen. Dazu wird eine modifizierte Ausführung des linken Rückschlagventils LR' und des rechten Rückschlags RR' verwendet. Die modifizierten Rückschlagventile LR' und RR' sind über eine erste Entsperrleitung 31 bzw. eine zweite Entsperrleitung 32 mit einem hydraulischen Druck beaufschlagbar, der unabhängig von den Druckverhältnissen in der Linksleitung LL bzw. der Rechtsleitung RR die beiden Rückschlagventile in ihre geöffnete Position bringen. Dabei kann die Ansteuerung der beiden Rückschlagventile LR' bzw. RR' entweder gemeinsam oder unabhängig voneinander erfolgen, wobei der in der ersten Entsperrleitung 31 bzw. der zweiten Entsperrleitung 32 eingestellte Druck unabhängig voneinander einstellbar ist.

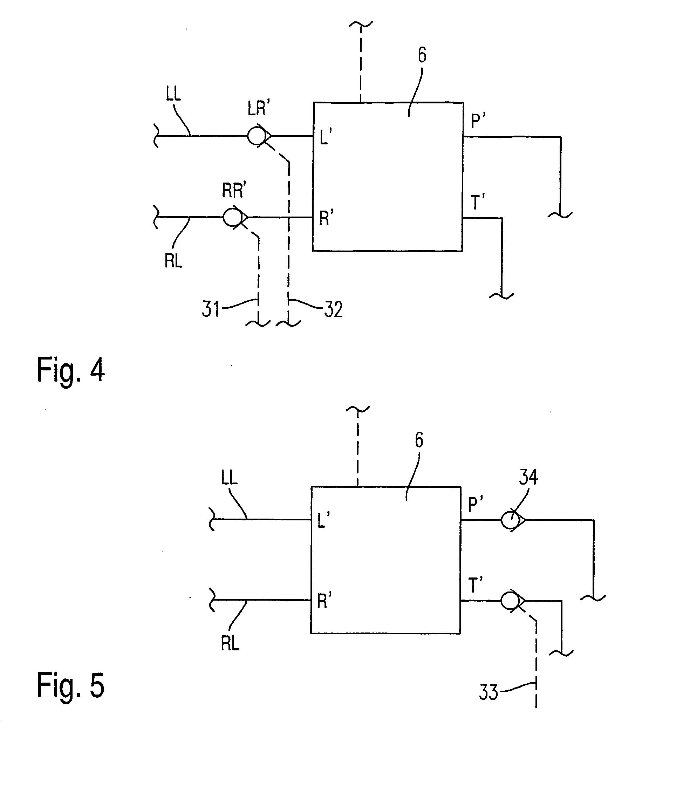

Eine Alternative ist in der Fig. 5 dargestellt. Dabei ist ein zwischen dem Tankanschluss T' der Ventileinheit 6 angeordnetes Rückschlagventil ebenfalls über eine Entsperrleitung 33 in seine geöffnete Position zu bringen. Damit kann über den Tankanschluss T' jeweils die Linksleitung LL oder die Rechtsleitung RL in Richtung des Tanks 10 entspannt werden, wobei die Zuordnung über die Ventileinheit 6 erfolgt. Auf der Zulaufseite ist stromaufwärts des Zulaufanschlusses P' ebenfalls ein Rückschlagventil 34 ausgebildet. Dieses Rückschlagventil 34 öffnet in Richtung der Ventileinheit 6 und sichert somit die Zweitpumpe 9 vor einer eventuell auftretenden unzulässigen Druckerhöhung.

## Patentansprüche

1. Hydraulische Lenkung (1) mit einer hydraulischen Lenkeinheit (2), die abhängig von der Bewegung eines Lenkers (4) Hydraulikmedium zu einem Lenkzylinder (5) speist, und einer Hilfsvorrichtung (3) mit einer Ventileinheit (6), welche abhängig von der Bewegung des Lenkers (4) zur Unterstützung der Lenkbewegung ebenfalls Hydraulikmedium zu dem Lenkzylinder (5) speist,
wobei das aus dem Lenkzylinder (5) in Folge des zugespeisten Hydraulikmediums verdrängte bzw. abfließende Hydraulikmedium alleinig über die Lenkeinheit (2) in einen Tank (10) bzw. zu einer Pumpe (8, 9) zurückfließen kann.

2. Hydraulische Lenkung nach Anspruch 1,
**dadurch gekennzeichnet,**
**daß** ein Zurückfließen des aus dem Lenkzylinder (5) abfließenden Hydraulikmediums über die Hilfsvorrichtung (3) durch zumindest eine Blockiervorrichtung (LR, RR) verhindert wird, welche den Fluß von Hydraulikmedium nur in einer von zwei Flußrichtungen zuläßt.

3. Hydraulische Lenkung nach Anspruch 2,
**dadurch gekennzeichnet,**
**daß** die Blockiervorrichtung (LR, RR) ein Rückschlagventil (RR, LR) ist.

4. Hydraulische Lenkung nach Anspruch 2 oder 3,
**dadurch gekennzeichnet,**
**daß** die Lenkeinheit (2) einen Linksanschluß (L) und einen Rechtsanschluß (R) aufweist, die Ventileinheit (6) einen Linksanschluß (L') und einen Rechtsanschluß (R') aufweist, die Linksanschlüsse (L, L') parallel geschaltet über zumindest eine Linksleitung (LL) mit einem linken Lenkzylinderraum (LZ) des Lenkzylinders (5) verbunden sind und die Rechtsanschlüsse (R, R') parallel geschaltet über zumindest eine Rechtsleitung (RL) mit einem rechten Lenkzylinderraum (RZ) des Lenkzylinders (5) verbunden sind, wobei Hydraulikmedium aus dem Rechtsanschluß (R') und dem Linksanschluß (L') der Ventileinheit (6) lediglich herausströmen kann und nicht hineinströmen kann.

5. Hydraulische Lenkung nach Anspruch 4,
**dadurch gekennzeichnet,**
**daß** in der Rechtsleitung (RL) und der Linksleitung (LL) vor dem Rechtsanschluß (R') und dem Linksanschluss (L') der Ventileinheit (6) jeweils die zumindest eine Blockiervorrichtung (LR, RR) angeordnet ist.

6. Hydraulische Lenkung nach einem der vorangegangenen Ansprüche,
**dadurch gekennzeichnet,**
**daß** die Ventileinheit (6) ein Proportionalventil ist.

7. Hydraulische Lenkung nach einem der vorangegangenen Ansprüche,
**dadurch gekennzeichnet,**
**daß** ein elektronisches Steuergerät (7) die Hilfsvorrichtung (3) bzw. die Ventileinheit (6) in Abhängigkeit von zumindest der Bewegung des Lenkers (4) steuert oder regelt.

## Claims

1. Hydraulic steering system (1), comprising a hydraulic steering unit (2) which supplies hydraulic medium to a steering cylinder (5) in dependence on the movement of a steering wheel or bar (4), and a servo device (3) with a valve unit (6) which also supplies hydraulic medium to the steering cylinder (5) in dependence on the movement of the steering wheel or bar (4) in order to assist the steering movement, the hydraulic medium displaced or discharged from the steering cylinder (5) as a result of the hydraulic medium additionally supplied being able to return only via the steering unit (2) to a tank (10) or a pump (8, 9).

2. Hydraulic steering system according to Claim 1, **characterised in that** a return flow of the hydraulic medium discharged from the steering cylinder (5) via the servo device (3) is prevented by at least one blocking device (LR, RR), which enables hydraulic medium to flow in only one of two flow directions.

3. Hydraulic steering system according to Claim 2, **characterised in that** the blocking device (LR, RR) is a non-return valve (RR, LR).

4. Hydraulic steering system according to Claim 2 or 3, **characterised in that** the steering unit (2) has a left-hand connection (L) and a right-hand connection (R), the valve unit (6) has a left-hand connection (L') and a right-hand connection (R'), the left-hand connections (L, L') are connected in parallel via at least one left-hand line (LL) to a left-hand steering cylinder chamber (LZ) of the steering cylinder (5), and the right-hand connections (R, R') are connected in parallel via at least one right-hand line (RL) to a right-hand steering cylinder chamber (RZ) of the steering cylinder (5), hydraulic medium being able to flow only out of and not into the right-hand connection (R') and the left-hand connection (L') of the valve unit (6).

5. Hydraulic steering system according to Claim 4, **characterised in that** in the right-hand line (RL) and the left-hand line (LL) the at least one blocking device (LR, RR) is arranged before the right-hand connection (R') and of the left-hand connection (L') respectively of the valve unit (6).

6. Hydraulic steering system according to any one of the preceding claims, **characterised in that** the valve unit (6) is a proportional valve.

7. Hydraulic steering system according to any one of the preceding claims, **characterised in that** an electronic control unit (7) controls or regulates the servo device (3) or the valve unit (6) in dependence on at least the movement of the steering wheel or bar (4).

## Revendications

1. Direction hydraulique (1) avec une unité de direction hydraulique (2) qui, en fonction du mouvement d'une bielle (4), alimente un agent hydraulique à destination d'un cylindre de direction (5), et un dispositif auxiliaire (3) avec une unité de soupape (6) qui, en fonction du mouvement de la bielle (4), pour assister le mouvement de la bielle, alimente également un agent hydraulique au cylindre de direction (5),
moyennant quoi l'agent hydraulique déplacé ou s'écoulant à partir du cylindre de direction (5), par suite du l'amenée de l'agent hydraulique, peut retourner uniquement par l'unité de direction (2) dans un réservoir (10) ou vers une pompe (8, 9).

2. Direction hydraulique selon la revendication 1,
**caractérisée en ce que**
un retour de l'agent hydraulique s'écoulant à partir du cylindre de direction (5) par le dispositif auxiliaire (3) est bloqué par au moins un dispositif de blocage (LR, RR) qui ne permet l'écoulement de l'agent hydraulique que dans l'une des deux directions d'écoulement.

3. Direction hydraulique selon la revendication 2,
**caractérisée en ce que**
le dispositif de blocage (LR, RR) est une soupape anti-retour (RR, LR).

4. Direction hydraulique selon la revendication 2 ou 3,
**caractérisée en ce que**
l'unité de direction (2) présente un raccordement à gauche (L) et un raccordement à droite (R), l'unité de soupape (6) présente un raccordement à gauche (L') et un raccordement à droite (R'), les raccordements à gauche (L, L') montés en parallèle sont raccordés par l'intermédiaire d'au moins une conduite à gauche (LL) à un espace de cylindre de direction à gauche (LZ) du cylindre de direction (5) et les raccordements à droite (R, R') montés en parallèle par l'intermédiaire d'au moins une conduite à droite (RL) sont raccordés à un espace de cylindre de direction à droite (RZ), moyennant quoi le fluide hydraulique en provenance du raccordement à droite (R') et du raccordement à gauche (L') de l'unité de soupape (6) peut uniquement sortir et ne peut pas entrer.

5. Direction hydraulique selon la revendication 4,
**caractérisée en ce que**
dans la conduite à droite (RL) et la conduite à gauche (LL), en amont du raccordement à droite (R') et du raccordement à gauche (L') de l'unité de soupape (6), est disposé respectivement le au moins un dispositif de blocage (LR, RR).

6. Direction hydraulique selon l'une des revendications précédentes,
**caractérisée en ce que**
l'unité de soupape (6) est une soupape proportionnelle.

7. Direction hydraulique selon l'une des revendications précédentes,
**caractérisée en ce que**
un appareil de commande électronique (7) commande ou régule le dispositif auxiliaire (3) ou l'unité de soupape (6) en fonction d'au moins le mouvement de la bielle (4).
